# EUROPEAN PATENT SPECIFICATION

(11) **EP 1 947 226 B1**
(45) Date of publication and mention of the grant of the patent: **05.01.2011**
(21) Application number: 08150340.1
(22) Date of filing: 17.01.2008
(51) Int. Cl.: D04H 1/72, D04H 13/00, B32B 5/26, A47K 10/16

(54) **Towel material and method for the manufacture thereof.**
Tuchmaterial und Verfahren zur Herstellung
Matériau pour serviette et méthode de fabrication

(30) Priority: 17.01.2007 NL 1033241
(43) Date of publication of application: 23.07.2008
(73) Proprietor: Vendor B.V., 5047 TT Tilburg (NL)
(72) Inventor: de Jong, Theodor Robbert Marie, 4741 RT, Hoeven (NL)
(74) Representative: Hatzmann, Martin

(56) References cited:
- EP-A- 0 287 264
- EP-A1- 0 393 254
- GB-A- 621 950
- GB-A- 789 678
- GB-A- 862 545
- US-A- 2 986 780
- US-A- 3 597 299
- US-A- 4 078 958
- US-A- 4 097 638
- US-A- 4 731 276

## Description

The invention relates to towel material. The invention furthermore relates to a method for the manufacture thereof.

As a rule, towel material is subdivided into towel material suitable and intended to be used repeatedly, such as cotton and linen towels, and towel material suitable and intended to be used only once, such as paper towels.

Towel material to be used only once can be subdivided into separate sheets of paper, such as tissues, rolls of towel material or strips of towel material, folded into a stack of sheets. For rolls and stacks of towel material, special dispensers are designed in which dispensed and used towel material is recovered to be thrown away after a while. As a rule, these sheets, rolls and stacks are manufactured from paper with a netting reinforcement, in order to apply sufficient tensile strength to the material, also when it is moist. Further, towel machines are known in which the used material is not recovered but is thrown away immediately.

For towel material to be used repeatedly, which is used in, for instance, public conveniences, such as in offices and restaurants, use is made of woven material, consisting of long cotton fibers, interwoven with polyester fibers, in order to achieve the desired tensile strength. Here too, it applies that rolls of such towel material can be dispensed in a dispenser which recovers the used material, on a waste roller, in a manner such that the used material is to be removed to be cleaned and reused.

It has appeared that for a user, cotton towel material, such as the material used for separate towels such as bath towels, kitchen towels and the like, intended to be reused, is preferred. Cotton towels have the advantage that they absorb moisture well, feel soft to the touch and are furthermore well cleanable. Such towels can be woven with relatively long cotton fibers that form loops for obtaining a relatively large, soft and absorbing surface, while the fabric still offers sufficient strength. However, such towel material is relatively expensive.

By weaving polyester fibers in such a material, the cost price can be reduced while, furthermore, strips of a relatively great length can be formed which can be rolled up to be used in dispensers. However, a mixture of cotton and polyester has as a disadvantage that it takes up moisture less well than pure cotton and that weaving the material is relatively expensive. Further, such towel material has a relatively great thickness so that relatively little material can be included in the dispenser. Furthermore, reusing towel material has the drawback that it requires a logistic system of supplying and returning the rolls of towel material and that used, dirty rolls are often stored together with clean rolls, so that cross contamination can occur, and that, as a rule, such a system requires disproportionately much space, which makes use of such towel material more expensive.

GB 862545 describes a material comprising a woven or glued netting structure with longitudinal and transverse threads around which on at least one side a non-woven facing is provided such that at least a part of the fibers of the facing deforms while forming a puffed surface. The facings can be formed from, for instance, crepe or cotton fibers, mutually adhesively bonded or mixed with synthetic fibers that are connected with each other and/or connected with the netting material. In order to obtain the puffed surface, upon production of this material, the netting material is formed during the application of the or each facing, in a manner such that when the netting material is released and regains substantially it original shape again, the facings and, in particular, fibers therein are deformed. The thus formed material can be used for all sorts of applications. US4 097 638 describes a reinforced sheet, useful as wiping cloth or towel for removing oil from an aqueous mixture, comprising a net-like reinforcing structure between at least two layers or sheets of nonwoven material predominately composed of cotton.

The invention contemplates presenting towel material suitable to be used only once in towel dispensers.

In a first aspect, towel material according to the invention is characterized by the features of claim 1.

By applying cotton as a facing on a netting reinforcement, the advantage is achieved that relatively little cotton needs to be used, that the netting reinforcement provides the tensile strength required for use of the towel material in a dispenser, while the glue effects, on the one side, that the cotton fibers bond to the netting reinforcement and, on the other side, that the fibers maintain an outwardly directed surface which is substantially free of additions, so that a maximum absorbing capacity is obtained while the surfaces of the facings feel soft to the touch of a user because the netting reinforcement is covered by the facings. The cotton can be provided as loose fibers but it is preferred that the facings be applied as a non-woven cotton layer. The facings can then be thin because the netting reinforcement provides the desired tensile strength. The netting reinforcement furthermore offers the advantage that the material can be folded.

It is preferred that a cotton non-woven material be formed through hydroentangling. As the cotton is glued onto the netting reinforcement, it can be applied in a relatively thin layer, so that the entire thickness of the towel material can be kept relatively small, which is advantageous because then, the material takes up little space. This composite towel material can be manufactured at relatively low costs so that it can be used once as disposable, while offering the advantages of cotton towel material. Hydroentangling offers the advantage that the cotton fibers can be bonded without additions to form a nonwoven, so that maximum absorption capacity is maintained while keeping the material relatively thin.

Furthermore, hydroentangling offers the advantage that the fibers can be slightly puffed up so that a desired thickness of facing can be obtained with relatively little cotton.

With towel material according to the invention, preferably, a netting material is used that is manufactured from synthetic material and/or threads, in which or through which openings with a relatively small surface have been formed, for instance less than 40 mm², more particularly less than 30 or 25 mm², but preferably more than 5 - 7 mm². As a result, the facings can be connected to the netting reinforcement as well as to each other, absorption is improved in that moisture can flow away from one facing into the other facing and still, a sufficiently strong structure of the netting reinforcement is maintained, which can furthermore be manufactured to be relatively thin, flexible and cost-favourable. The threads may be manufactured from synthetic material or fabric fibers and be formed into a netting structure in a manner known per se.

Preferably, the netting reinforcement is impregnated with glue prior to placement of the cotton, so that the cotton is prevented from being saturated with the glue. This is of importance because otherwise, the absorbing capacity of the fibers is annulled and, furthermore, the facings will not be soft to the touch.

Surprisingly, it has appeared that with towel material according to the invention, relatively thin facings can be formed, that are furthermore slightly compressible. As a result, the towel material can be stored relatively compactly, for instance as a roll or in folded condition, and therefore take up little space, both prior to use and after use. Upon folding, the netting reinforcement offers the advantage that the material is maintained in folded condition.

In a further aspect, the invention is characterized by a method for forming towel material, according to the features of claim 9.

This method offers the possibility to provide relatively thin, supple and soft towel material which is suitable for rolls but in particular for folded strips of towel material that can be used in towel machines or towel dispensers, while it is furthermore suitable to be used once. Optionally, it can be cut into sheets or strips, for other types of dispensers.

By way of illustration of the invention, embodiments thereof will be further elucidated on the basis of the drawing. In the drawing:
Fig. 1 shows, in front view, a strip of towel material according to the invention, with partly cutaway top facing and partly cutaway netting reinforcement;
Fig. 2 schematically shows, in partly cross-sectional side view along the line II-II in Fig. 1, a strip of towel material according to the invention;
Fig. 2A shows an enlargement of a portion of the cross section in Fig. 2, indicated by the circle drawn therein;
Fig. 3 schematically shows, in side view, steps in the manufacture of towel material according to the invention;
Fig. 4 shows, in side view, a cassette of towel material, folded from a strip, for instance according to Fig. 1; and
Fig. 5 shows an alternative embodiment of an apparatus for manufacturing towel material according to the invention.

In this description, identical or corresponding parts have identical or corresponding reference numerals. The embodiments shown are shown merely by way of illustration. Herein, wording such as substantially, approximately and the like are to be understood to mean that small deviations with respect to a given value are possible within the framework wherein these terms are used. Herein, small is at least understood to include, unless expressly stated otherwise, comprising deviations of the given value of plus and minus 5%.

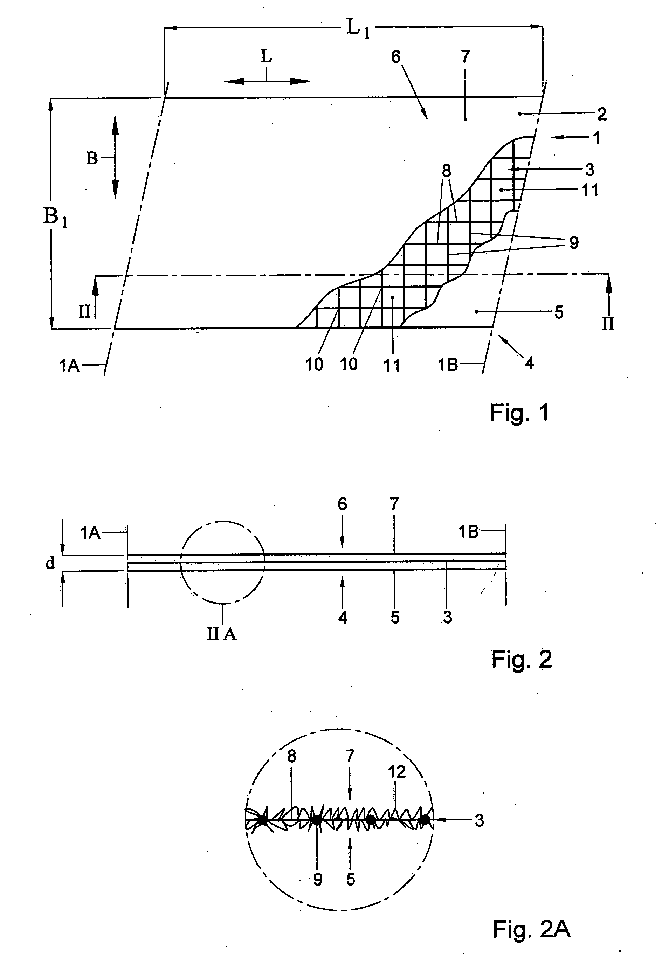

Fig. 1 shows, in top plan view, which corresponds substantially to the bottom view, a portion of a strip 1 of towel material 2 according to the invention, having a longitudinal direction L and a transverse direction B. The scores 1A, 1B indicate that in the longitudinal direction L, the strip 1 has, or can have a length that is considerably greater than the length L1 shown and, furthermore, considerably greater than the width B1 in the transverse direction B. The strip 1 is mainly built up from a netting reinforcement 3 having, on a first side 4, a first facing 5 and, on an opposite side 6, a second facing 7, as clearly appears from Fig. 2. In Fig. 1, a portion of the second, top facing 7 has been removed, as well as a portion of the netting reinforcement, in order to represent the structure in a clearly visible manner.

In the exemplary embodiment shown, the netting reinforcement 3 is formed from longitudinal threads 8 and transverse threads 9, mutually connected in junctions 10 to form a netting structure with openings 11. To that end, the netting reinforcement may have been woven, knitted, laid, extruded, mended or otherwise be processed to form the said netting structure. Such methods are directly clear to the skilled person. The threads 8, 9 may have been manufactured from fabric such as yarn, but may also have been made from synthetic material. Optionally, transverse threads 9 can be omitted. The longitudinal threads 8 provide a high tensile strength in the longitudinal direction L. Here, the optional transverse threads 9 provide cohesion in the netting reinforcement, while they furthermore provide strength in the transverse direction. Optionally, a netting reinforcement 3 can also be formed as non-woven, for instance by gluing threads onto each other or by using a foil with openings 11 therein.

The facings 5, 7 are built up from cotton, schematically shown in Fig. 2A. The cotton is glued onto the netting reinforcement 3 with the aid of glue with which, as will be discussed further, the netting reinforcement has been impregnated or at least rubbed. It is preferred that then, a hotmelt is used. The cotton facings 5, 7 are only partly in contact with the glue, so that the greater part of their surface is free of glue and therefore highly absorbent and furthermore, soft. In particular only those fibers in the cotton facings 5, 7 proximal to the netting reinforcement are in contact with the glue, so that the facings are further free from glue. Preferably, the facings are formed from approximately 100% cotton. It is preferred, in particular, that no synthetic fibers are added to the facings. In an alternative embodiment, other natural fibers may have been added in small amounts. In the openings 11 the cotton fibers 12 also abut against each other, while moisture can flow from a facing 5, 7 to the other facing 7, 5, through the openings 11. This offers the interesting advantage that the towel material 2 is highly absorbent, on both sides, and furthermore feels soft to the touch on both sides, while its thickness d can be reduced considerably. The facings 5, 7 are compressible, so that in use, the towel material feels relatively thick and, consequently, luxurious, while it can be stored in a compact manner, both prior to use and after use, which offers advantages both logistically and for environmental reasons.

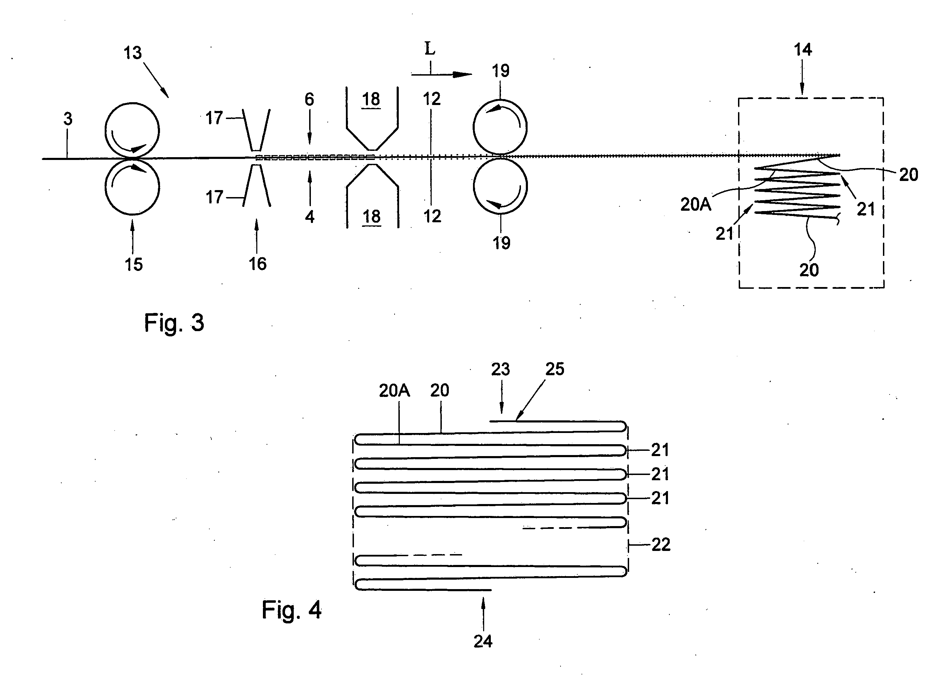

In Fig. 3, schematically, a side view is shown of an apparatus 13 for manufacturing towel material 2 according to the invention, with, consecutive thereto, a folding apparatus 14.

In the apparatus 13, from a supply roll (not shown) a netting reinforcement 3 is supplied in the longitudinal direction L. This is conveyed with the aid of, for instance, a set of rollers 15. In a first station 16, with the aid of a set of glue supply devices 17, glue is applied on the netting reinforcement 3. In the example shown, both on the first and on the second side 4, 6, at least one glue supply device is provided. However, naturally, the glue can also be supplied from only one side. Optionally, the netting reinforcement can also be provided with an adhesive layer, such as a pressure sensitive or temperature sensitive glue, before it is brought in the direction 13, for instance by submerging the netting reinforcement, prior thereto, in a glue bath or feeding it therethrough. Other means too can be utilized for applying the desired adhesive layer, such as glue. In this description, glue is understood to also include other adhesives with which cotton fibers 12 can be provided on the netting reinforcement. The glue can for instance cover all fibers completely, but can also be applied on discrete positions, for instance as spots at junctions between longitudinal and transverse threads and/or therebetween, in order to bond only a part of the fibers 12 of the facings with the netting reinforcement.

Behind the glue supply devices 17, viewed in feed-through or longitudinal direction L, fiber supply devices 18 are provided, for applying on both sides 4, 6 of the netting reinforcement 3 a layer of fibers 12. The fibers are applied against the netting reinforcement and will fill the openings 11 at least partly. The fibers 12 are applied over the entire width of the strip of netting reinforcement 3, so that on both sides a facing 5, 7 is provided which covers the entire netting reinforcement. Then, the strip is fed between rollers 19 or similar pressing means, so that the fibers 12 are pressed against and into the netting reinforcement 3, so that they are somewhat compressed and are secured. Then, preferably, heat is supplied, for instance through heating of the rollers 19, whereby an even better bonding is obtained and, furthermore, the fibers obtain, or at least maintain, their softness. The strip of towel material 2 is thus brought into the desired condition to be processed further.

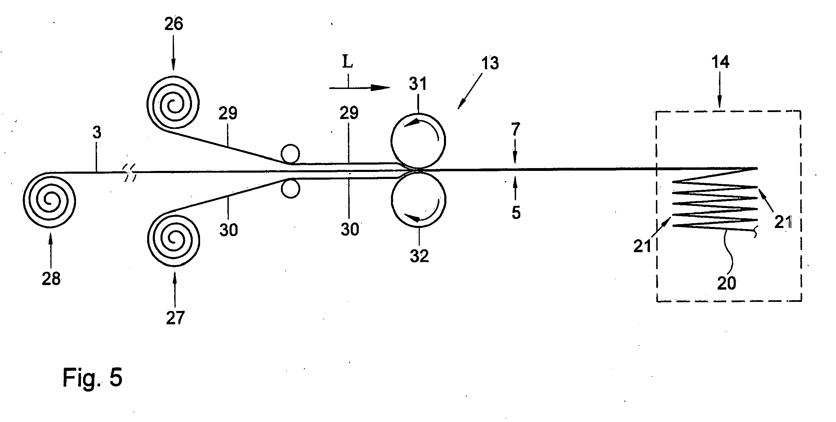

In Fig. 5, schematically, an alternative embodiment is shown of an apparatus 13 for the manufacture of towel material according to the invention. Here, use is made of a nonwoven cotton, preferably manufactured through hydro entanglement, which can be described as mechanical bonding of fibers through the use of water jets. Such a method of manufacture of nonwovens is known per se. Presently, it has appeared that such a method is possible for forming cotton nonwoven and, furthermore, leads to particularly good facings, in particular in that they can be manufactured to be relatively thin, in an economical manner, maintain a maximum moisture absorption capacity because no synthetics or glues or similar additives are required, and have a particularly pleasant softness.

It will be clear that hydro entanglement can also be used with the embodiment according to Figs. 1- 4, wherein for instance fibers can be applied onto the netting material, for instance poured in bulk, and can then be bonded through hydro entanglement. Here, fibers in a facing can be bonded to each other on one side of the netting material and also, fibers of both facings on both sides of the netting material. This means that immediately, a good bonding between the fibers and the netting material can be obtained. Then, optionally, glue on the netting material can be omitted, except for, optionally, the bonding of the longitudinal and transverse threads of the netting material itself. Hydro entanglement in combination with the netting material as described can offer the advantage that the towel material can be folded very well, while furthermore, it remains in folded condition well when, for instance, a stack folded in a zigzag manner is formed, while the towel material still feels soft and bouncy, absorbs particularly well and, surprisingly, can conform particularly well to, for instance, hands to be dried. It has appeared that with towel material according to this description, users can dry, for instance, their hands or faces better than with customary towel materials of paper, not only because of an improved absorption but also because of a better contact of the towel material with the body parts to be dried.

In the apparatus 13, two strips 29, 30 of nonwovens are supplied from two rollers 26, 27, in a supply direction L, while from a third roller 28, a strip of netting reinforcement is supplied. The netting reinforcement 3 is provided with a hotmelt glue or at least a glue which is activated through pressure and/or heat. The netting reinforcement 3 is fed between the two nonwoven strips 29, 30, whereupon the three strips 29, 3, 30, lying on top of one another are moved between two pressing rollers 31, 32 while at least one of the two rollers 31, 32 is heated, so that the strips 29, 30 are pressed onto and into the netting reinforcement 3 and the glue is activated so that the strips 29, 30 are bonded to the netting reinforcement and form the facings 5, 7. Then, in an apparatus 14, again, the thus formed strip of towel material can be folded or, for instance, be rolled up or be cut into sheets. Preferably, cassettes 22 with folded strips are formed, which are maintained in folded condition because the netting reinforcement has been plastically deformed at the location of the folds.

As schematically shown in Fig. 3, the strip 1 can be folded in a folding direction 14, or be rolled up. Before folding, in the folding apparatus 14, by means of a folding knife or in another suitable manner known per se, a series of folding lines 21 is provided, transversely to the longitudinal direction, between which sheets 20 are formed. Thereupon, a sheet 20, each time leading in a longitudinal direction L, is folded onto or below a preceding sheet 20A, so that a stack 23 of folded strip 2 is obtained, substantially consisting of sheets 20 connected by the folding lines 21. Preferably, the folding lines are formed in that at least the facings 5, 7, and preferably also the netting reinforcement 3 is somewhat compressed, while it is preferred that the netting reinforcement is at least partly plastically deformed so that the shape memory of the netting reinforcement 3 is neutralized and the strip does not bounce back, or at least to a lesser extent.

In Fig. 4, in side view, a cassette 22 comprising a stack 23 is shown. For forming such a cassette 22, the strip 2 is cut to a desired length while forming a leading, first end, and trailing, second end 23, 24. At least one of the ends 23, 24 is provided with a bonding agent 25, for instance an adhesive layer, with which this end 23, 24 can be connected to an end 23, 24 of another cassette, at least strip 2. In this manner, each time, a new cassette can be placed on an old one and dispensing the strip 2 needs not be interrupted. Such a system of mutually coupling strips/cassettes and a dispenser to be user therewith is known from, for instance EP 0 107 223.

With a netting reinforcement 3 according to the invention, the openings preferably have a size between 5 and 40 mm², more particularly between 7 and 30 mm², and preferably between 7 and 25 mm². As a result, a towel material is obtained with which sufficient strength is combined with sufficient absorbing capacity, high softness, good absorbing capacity and sufficient pliability. Naturally however, other sizes can be used. Preferably, the facings consist substantially of at least 98% cotton, more particularly 100% cotton. Surprisingly, it has appeared that through the use of towel material according to the invention, the disadvantage users experience when using mixtures of cotton and synthetic fibers, i.e. the towel material catching on unevennesses of the skin of the user, does not occur. Furthermore, the use of polyester fibers has as a drawback that the moisture absorbing capacity and, consequently, the drying capacity of the towel material is adversely affected.

Preferably, the facings have a thickness that is smaller than five times the thickness of the netting reinforcement, more particularly less than three times this thickness, so that a relatively thin, strong strip of towel is obtained. The netting reinforcement can have a thickness of, for instance, less than 0.5 mm, preferably smaller than 0.1 mm, for instance between 0.05 and 0.08 mm, the total towel material in non-compressed condition a thickness of less than 1 mm, for instance approximately 0.5 mm or less.

By way of illustration, sizes and dimensions of a netting material will be given that should not be construed to be limitative in any manner. In one example, a netting material can be formed having longitudinal threads and transverse threads formed substantially from polyester, while the longitudinal threads can be designed to be slightly heavier that the transverse threads. The threads can be mutually bonded through, for instance, gluing or melting. The longitudinal threads can be between, for instance, 120 and 220 Dtex, for instance approximately 167 dtex. The transverse threads may be between, for instance, 100 and 180 dtex, for instance approximately 140 dtex. The strength of the longitudinal threads can for instance be at least 50 Newton / 50 millimetres, more particularly at least 75 Newton/50 millimetres. In one embodiment, the tensile strength can be approximately 78 Newton/50 millimetres. The tensile strength of the transverse threads may be lower, for instance at least approximately 25 Newton / 50 millimetres, more particularly 30 Newton/50 millimetres. In one embodiment, this can be approximately 31 Newton/50 millimetres. Warp elongation at break can be, for instance, some percents to some tens of percents, for instance approximately 20 to 25%. In one embodiment, this can be approximately 22%. Weft elongation at break can be slightly smaller than that of the longitudinal threads. In one embodiment, this can be approximately 20%. The weight of the netting material can be relatively low, for instance between 8 and 20 gram/m², more particularly between 8 and 15 gram/m², for instance approximately 10 tot 11gram/m². The given values and ratios of these values are merely shown by way of illustration. Deviations therefrom are possible within the framework of the invention as outlined by the claims.

For instance, a netting reinforcement for towel material can be built up in different manners, both having and not having transverse threads, and from various possible materials. Preferably, the material of the netting reinforcement, together with the cotton, is recyclable or biologically degradable. The strip formed by the apparatus 13 can be cut into a series of separate, side-by side strips, which each form a strip of towel material for use in a dispenser. The cassettes can have different dimensions, for instance different numbers of folds and, consequently, sheets. The strip can also be rolled up for forming a loop in a towel dispensing apparatus or be cut into separate sheets.

## Claims

1. Towel material in the form of a strip (1) having a length and a width, wherein the length is greater than the width, which material comprises netting material (3) which is provided with glue and is covered on two opposite sides by a facing (5, 7) manufactured with cotton, **characterized in that** the facings (5, 7) are manufactured through mechanical bonding of cotton fibers through water jets hydroentanglement.

2. Towel material according to claim 1, wherein the netting material (3) is substantially manufactured from synthetic material and/or thread and is completely covered by said facings (5, 7).

3. Towel material according to claim 1 or 2, wherein the facings (5, 7) are manufactured from nonwoven cotton strips.

4. Towel material according to any one of the preceding claims, wherein the netting material (3) comprises longitudinal threads (8) and transverse threads (9), in a manner such that as a result, meshes are formed with a surface between 5 and 40 mm², more particularly between 7 and 30 mm² and preferably between 7 and 25 mm².

5. Towel material according to any one of the preceding claims, wherein the facings (5, 7) comprise at least 98% by weight of cotton.

6. Towel material according to any one of the preceding claims, wherein the facings (5, 7) have a thickness which is less than 5 times the thickness of the netting material (3), preferably less than 3 times this thickness.

7. Towel material according to any one of the preceding claims, wherein the material is folded into a stack of zigzag folded sheets, wherein folds are formed between said sheets by compressing at least the facings (5, 7).

8. Towel material according to any one of the preceding claims, wherein the strip (1) is folded zigzag and at each fold the netting reinforcement (3) is plastically deformed.

9. Method for forming towel material, wherein a netting material (3) having a length direction and a width direction is supplied in a processing apparatus, in said length direction, wherein the netting material (3) is provided with glue, whereupon on the netting material (3) on two opposite sides a cotton facing (5, 7) is provided, which facings (5, 7) completely cover the netting material (3) on said sides (4, 6) while, through heating and/or pressure, the cotton facings (5, 7) are secured to the netting material (3), **characterized in that** the facings (5, 7) are manufactured through mechanical bonding of cotton fibers through water jets hydroentanglement.

10. A method according to claim 9, wherein, after provision of the fibers, the towel material is folded by providing folds at regular mutual distances, and by folding sheets located therebetween in zigzag manner in opposite directions, while forming a stack of sheets mutually connected by folds.

11. A method according to claim 9 or 10 wherein the towel material is cut, viewed in longitudinal direction, to a preselected length in a manner such that strips are obtained with a beginning and an end, while at least one of said beginning and said end is provided with a connecting element, such as an adhesive strip, for coupling to a comparable strip of towel material.

## Patentansprüche

1. Tuchmaterial in Form eines Streifens (1) mit einer Länge und einer Breite, wobei die Länge größer ist als die Breite, wobei das Material ein Gewebe (3) aufweist welches mit Klebstoff versehen ist und auf zwei gegenüberliegenden Seiten mit einer Deckschicht (5, 7) aus Baumwolle bedeckt ist, **dadurch gekennzeichnet, dass** die Deckschichten (5, 7) durch mechanisches Verbinden von Baumwollfasern durch Wasserstrahlen, das heißt durch Hydroverschlaufung hergestellt sind.

2. Tuchmaterial nach Anspruch 1, wobei das Gewebe (3) im Wesentlichen aus synthetischen Material und/oder Garn hergestellt und vollständig durch die Deckschichten (5, 7) abgedeckt ist.

3. Tuchmaterial nach Anspruch 1 oder 2, wobei die Deckschichten (5, 7) aus Baumwoll-Fleece-Streifen hergestellt sind.

4. Tuchmaterial nach einem der vorstehenden Ansprüche, wobei das Gewebe (3) longitudinale Fäden (8) und transversale Fäden (9) aufweist, der Art, dass als Ergebnis Maschen mit einer Oberfläche zwischen 5 mm² und 40 mm² gebildet werden, insbesondere zwischen 7 mm² und 30 mm² und vorzugsweise zwischen 7 mm² und 25 mm².

5. Tuchmaterial nach einem der vorstehenden Ansprüche, wobei die Deckschichten (5, 7) mindestens 98 Gewichtsprozent Baumwolle enthalten.

6. Tuchmaterial nach einem der vorstehenden Ansprüche, wobei die Deckschichten (5, 7) eine Dicke aufweisen, die kleiner ist als die fünffache Dicke des Gewebes (3), vorzugsweise weniger als die dreifache Dicke des Gewebes.

7. Tuchmaterial nach einem der vorstehenden Ansprüche, wobei das Material in einem Stapel zickzackförmig gefalteter Tücher gefaltet ist, wobei die Faltungen zwischen den Tüchern geformt werden durch Pressen mindestens einer der Deckschichten (5, 7).

8. Tuchmaterial nach einem der vorstehenden Ansprüche, wobei der Streifen (1) zickzackförmig gefaltet ist und bei jeder Faltung die Gewebeverstärkung (3) plastisch verformt ist.

9. Verfahren zur Herstellung von Tuchmaterial, wobei ein Gewebe (3) mit einer Längsrichtung und einer breiten Richtung einer Verarbeitungsvorrichtung in Längsrichtung zugeführt wird, wobei das Gewebe (3) mit Klebstoff versehen wird, woraufhin das Gewebe (3) auf zwei gegenüberliegenden Seiten mit Baumwolldeckschichten (5, 7) versehen wird, wobei die Deckschichten (5, 7) das Gewebe auf den Seiten 4,6 vollständig bedecken, während durch Aufheizen und/oder Druck die Baumwolldeckschichten (5, 7) am Gewebe (3) befestigt werden, **dadurch gekennzeichnet, dass** die Deckschichten (5, 7) durch mechanisches Verbinden von Baumwollfasern durch Wasserstrahlen, das heißt durch Hydroverschlaufung hergestellt werden.

10. Verfahren nach Anspruch 9, wobei nach dem Vorsehen der Fasern das Tuchmaterial gefaltet wird durch Herstellung von Falzen in regelmäßigen Abständen zueinander und durch Falten der zwischenliegender Tücher in Zickzackform in entgegengesetzten Richtungen, wodurch ein Stapel von Tüchern, die jeweils untereinander durch Faltung verbunden sind, gebildet wird.

11. Verfahren nach Anspruch 9 oder 10, wobei das Tuchmaterial in Längsrichtung gesehen in einer vorbestimmten Länge so zugeschnitten wird, dass Streifen erhalten werden mit einem Anfang und einem Ende, wobei mindestens einer von dem Anfang und dem Ende mit einem Verbindungselement versehen ist, wie beispielsweise einem Klebestreifen, zum Verbinden mit einem vergleichbarem Streifen aus Tuchmaterial.

## Revendications

1. Matériau pour serviette se présentant sous la forme d'une bande (1) ayant une longueur et une largeur, dans lequel la longueur est supérieure à la largeur, lequel matériau comprend un matériau de filet (3) qui est prévu avec de la colle et est recouvert sur deux côtés opposés par une garniture (5, 7) fabriquée avec du coton, **caractérisé en ce que** les garnitures (5, 7) sont fabriquées par la liaison mécanique des fibres de coton par le biais de l'hydroenchevêtrement de jets d'eau.

2. Matériau pour serviette selon la revendication 1, dans lequel le matériau de filet (3) est sensiblement fabriqué à partir d'un matériau synthétique et/ou fil et est complètement recouvert par lesdites garnitures (5, 7).

3. Matériau pour serviette selon la revendication 1 ou 2, dans lequel les garnitures (5, 7) sont fabriquées à partir de bandes de coton non tissées.

4. Matériau pour serviette selon l'une quelconque des revendications précédentes, dans lequel le matériau de filet (3) comprend des fils longitudinaux (8) et des fils transversaux (9), de sorte que par conséquent des mailles sont formées avec une surface comprise entre 5 et 40 mm, plus particulièrement entre 7 et 30 mm² et de préférence entre 7 et 25 mm².

5. Matériau pour serviette selon l'une quelconque des revendications précédentes, dans lequel les garnitures (5, 7) comprennent au moins 98 % en poids de coton.

6. Matériau pour serviette selon l'une quelconque des revendications précédentes, dans lequel les garnitures (5, 7) ont une épaisseur qui est inférieure à 5 fois l'épaisseur du Matériau de filet (3), de préférence inférieure à 3 fois cette épaisseur.

7. Matériau pour serviette selon l'une quelconque des revendications précédentes, dans lequel le matériau est plié en une pile de feuilles pliées en zigzag, dans lequel des plis sont formés entre lesdites feuilles en comprimant au moins les garnitures (5, 7).

8. Matériau pour serviette selon l'une quelconque des revendications précédentes, dans lequel la bande (1) est pliée en zigzag et au niveau de chaque pli, le renforcement de filet (3) est déformé de manière plastique.

9. Procédé pour fabriquer un matériau pour serviette, dans lequel un matériau de filet (3) ayant une direction de longueur et une direction de largeur, est alimenté dans un appareil de traitement, dans ladite direction de longueur, dans lequel le matériau de filet (3) est prévu avec de la colle, suite à quoi, sur le matériau de filet (3) sur deux côtés opposés, on prévoit une garniture en coton (5, 7), lesquelles garnitures (5, 7) recouvrent complètement le matériau de filet (3) sur lesdits côtés (4, 6) alors que, par le biais du chauffage et/ou de la pression, les garnitures en coton (5, 7) sont fixées sur le matériau de filet (3), **caractérisé en ce que** les garnitures (5, 7) sont fabriquées par le biais de la liaison mécanique des fibres de coton par l'hydroenchevêtrement de jets d'eau.

10. Procédé selon la revendication 9, dans lequel, après avoir prévu les fibres, le matériau pour serviette est plié en prévoyant des plis à distances mutuelles régulières et en pliant les feuilles situées entre eux en zigzag dans des directions opposées, tout en formant une pile de feuilles mutuellement raccordées par des plis.

11. Procédé selon la revendication 9 ou 10, dans lequel le matériau pour serviette est coupé, observé dans la direction longitudinale, à une longueur présélectionnée de sorte que l'on obtient des bandes avec un début et une fin, alors qu'au moins l'un parmi ledit début et ladite fin est prévu avec un élément de raccordement, tel qu'une bande adhésive, pour se coupler à une bande comparable de matériau pour serviette.
